Europäisches Patentamt

(19) European Patent Office

Office européen des brevets

(11) Publication number: **0 151 426 B1**

# EUROPEAN PATENT SPECIFICATION

(45) Date of publication of patent specification: 21.08.91    (51) Int. Cl.5: **B60N 2/36**

(21) Application number: 85100593.4

(22) Date of filing: 21.01.85

(54) Improved vehicle provided with seats, the back rest of which can be folded down to the level of the load-carrying platform.

(30) Priority: 23.01.84 IT 6706884

(43) Date of publication of application:
14.08.85 Bulletin 85/33

(45) Publication of the grant of the patent:
21.08.91 Bulletin 91/34

(84) Designated Contracting States:
DE FR GB

(56) References cited:
EP-A- 0 013 849      EP-A- 0 030 924
DE-A- 3 102 844      FR-A- 1 452 002
FR-A- 2 447 830      GB-A- 623 528
US-A- 2 926 948      US-A- 2 997 335
US-A- 2 997 336

(73) Proprietor: FIAT AUTO S.p.A.
Corso Giovanni Agnelli 200
I-10135 Torino(IT)

(72) Inventor: Acuto, Giovanni
Via Dante di Nanni 16/5
I-10043 Orbassano(IT)
Inventor: Sburlati, Luigi
Corso Giambone 53
I-10100 Torino(IT)
Inventor: Stacchino, Giuseppe
Via Tiepolo 10
I-10024 Moncalieri(IT)

(74) Representative: Prato, Roberto et al
STUDIO TORTA Società Semplice Via Viotti 9
I-10121 Torino(IT)

**Description**

This invention relates to a vehicle, particularly a motor vehicle, according to the first part of Claim 1.

Such background art is reflected in the following documents:

US-A-2,997,336 discloses a vehicle in which each seat is of the type of the front seat of the vehicle according to the application in object, i.e. in which the back rest and the cushion assembly are not connected to each other. Such a type of foldable seat is adapted for a front seat of the chair type (i.e. for a single person) only, but is not adapted for a rear seat of the bench type (i.e. for receiving two or three persons); in fact, the latter seat has to be folded much more often than a front seat, and is generally more complicated to operate, in particular with vehicles provided with side doors in correspondence with the front seats only. Accordingly, a vehicle equipped with such a type of foldable seat only can be employed without difficulties only if equipped with special side doors, e.g. just like the vehicle shown in this reference is; moreover, the user may occur the risk to injure himself when folds over the cushion assembly the back-rest of a seat of the bench type and having the structure shown by this reference through the door opening of the vehicle: it is in fact very difficult to balance the weight of a long back-rest like that of a bench type seat holding the same at one end only.

FR 2.447.830 discloses a rear seat for a vehicle in which the back-rest is not connected to the cushion assembly too; practically speaking this reference shows seats completely equivalent to those shown by (4); the only difference consists in that the back-rest is hinged directly to the floor of the vehicle, instead of to the same frame which supports the cushion assembly. This difference does not overcome the aforedescribed drawbacks; on the contrary it causes a further possible drawback like a possible bad alignment between the back-rest and the cushion assembly when in unfolded position due to the fact that these two elements not only are not connected to each other, but are even supported by different elements.

EP 0013849 discloses seats very similar to those described in FR2447830 and presenting the same drawbacks: in fact, also this reference teaches to hinge the back-rest and the cushion assembly to different elements and to operate the two parts separately.

US-A-2,997,335 discloses an automotive folding seat in which the movement of the cushion assembly is automatically obtained by folding the back-rest.

The object of the present invention is to provide a vehicle comprising at least one front seat and a rear seat, the back rests of which can be rotated towards the front of the vehicle in such a manner as to assume respective folded-down positions in which said back rests are substantially coplanar with each other and with the load-carrying platform of the vehicle luggage compartment, in order to form with this latter platform, and substantially without discontinuity, a single load-bearing surface which can also serve as a surface on which the vehicle users and/or passengers can lie down so that they can substantially sleep on board said vehicle in a comfortably extended position. A further object of the present invention is to provide a vehicle of the aforesaid type, of which the seats are at least as easy to use and as comfortable as the seats of known vehicles of the type in which it is not possible to fold-down all the back rests to the level of the load-carrying platform as described.

The said objects are attained according to the present invention by a vehicle of the said type having the features of the second part of Claim 1.

The present invention will be more apparent from the non-limiting description given hereinafter of one embodiment thereof with reference to the accompanying drawings in which:

Figure 1 is a diagrammatic illustration of the main elements of a vehicle constructed in accordance with the present invention and with its seats disposed in their working position, ie in a position such as to receive the vehicle users in a sitting position; and

Figure 2 is a diagrammatic illustration of the vehicle of Figure 1 with its seats disposed in a position folded-down to the level of the vehicle load-carrying platform.

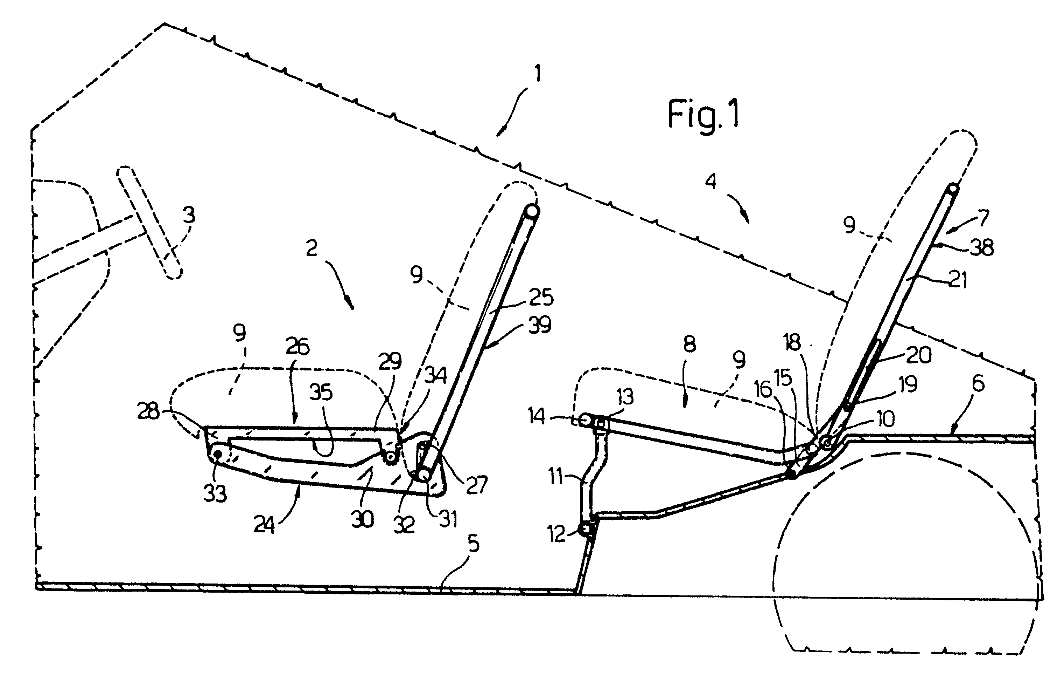

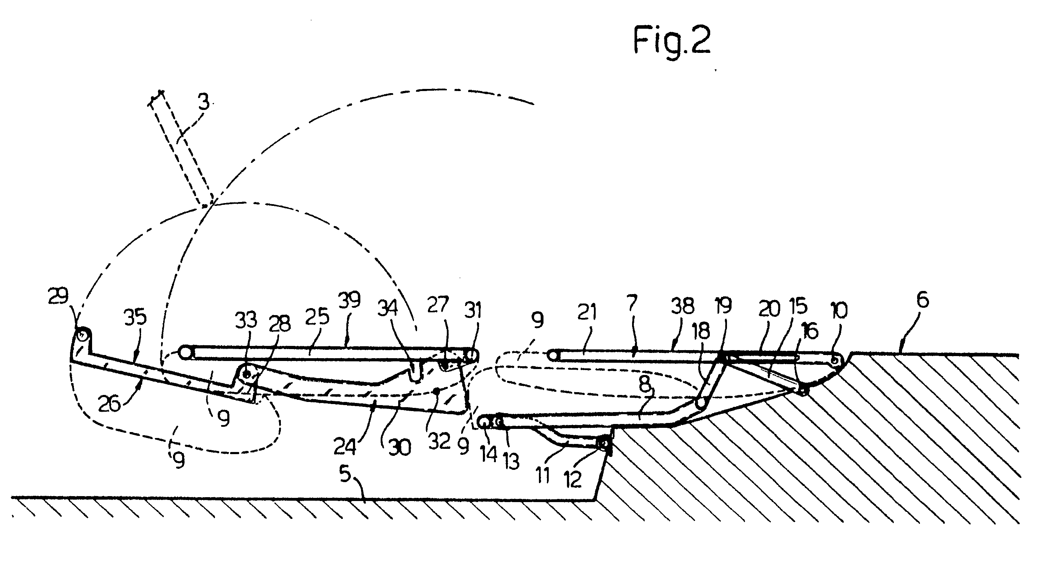

In Figure 1, the reference numeral 1 indicates overall a vehicle of any known type, for example a motor vehicle, which is shown for simplicity in only diagrammatic form and only partly, and comprises at least one front seat 2, a steering wheel 3, a rear seat 4 and a floor 5 forming part of the vehicle body and carrying said seats 2 and 4, said floor 5 defining at the rear of the vehicle a load-carrying platform 6 disposed to the rear of the seat 4 and situated in the luggage compartment, not shown for simplicity, of the vehicle 1. The seat 4 comprises a respective back rest 7 and a respective cushion assembly 8 which are defined by suitable support frameworks which are hinged together and are covered with respective padding 9, of known type indicated by dashed lines for simplicity. The back rest 7 is hinged at 10 to the floor 5 substantially in proximity to the load-carrying platform 6, and is arranged to rotate about its hinging axis in a direction towards the front seat 2 in order to move into a folded-down position shown in Figure 2, in which the back rest 7 is substantially coplanar with the platform 6. In particular, the seat 4 comprises at least one connection bar 11 hinged at one end, at 12, to the floor 5 and hinged at the opposite end, at 13, to the front end 14 of the cushion assembly 8, and at least one connection bar 15, visible in Figure 2, a first end of which is hinged at 16 to the floor 5 in proximity to the back rest 7 in a position eccentric to the hinge 10, and the second end of which is hinged to the rear end 18 of the cushion assembly 8. The end 18 is bent upperly towards the back rest 7 beyond the plane in which the cushion assembly 8 lies, and is hinged to the connection bar 15 by a hinge pin 19 which is slidably engaged in respective longitudinal through slots 20 provided in lateral support elements 21 of the back rest 7. In this manner the cushion assembly 8, back rest 7 and connection bar 15 are joined articulatedly at 19, and the connection bar 15 and the end 18 are slidable rigid with each other along the back rest 7, parallel to this latter, between the guide means constituted by the slots 20. By virtue of this original combination of articulated elements, and in particular by virtue of the presence of the connection bar 15, the seat 4 can be folded down to the level of the load-carrying platform 6 starting from its normal working position shown in Figure 1, until it reaches the folded position shown in Figure 2, because the cushion assembly 8 is hinged to the floor 5 and to the respective back rest 7 and is also able to translate on rotating the back rest 7 on its hinges 10 towards the floor 5, while keeping substantially parallel to this latter. Suitable known locking means, not shown for simplicity, are provided for keeping the back rest 7 locked in the position of Figure 1 such that this latter can receive one or more users in a seated position, and can be manually disengaged so as to release the back rest 7 and enable the user to push it towards the back rest 2 of the front seat so causing it to rotate about its hinges 10, with the consequent automatic downward folding of the entire seat 4. In this respect, it is apparent that rotating the back rest 7 towards the front seat 2 causes simultaneous translation and rotation of the connection bar 15, thus obliging the cushion assembly 8, hinged at 19 to this latter, to move forwards towards the seat 2 and to simultaneously translate towards the floor 5 because of the rotation of the connection bar 11, which when the seat 4 has been folded-down reaches a substantially horizontal position.

The front seat 2 comprises a respective back rest 25, a respective cushion assembly 26, and a supporting frame 24 disposed substantially parallel to the floor 5 at a lower level than the load-carrying platform 6, said frame being carried slidably in any known manner, not shown for simplicity, by said floor 5. The back rest 25 and cushion assembly 26 are defined by suitable reinforcement elements hinged to the frame 24, and by respective padding 9, shown by dashed lines, which covers said reinforcement elements. In particular, the back rest 25 is hinged to the frame 24 at 27 so as to be free to rotate about an axis substantially parallel to the load-carrying platform 6 and to said axis of rotation of the back rest 7, whereas the cushion assembly 26 is hinged at its front end 28 to the frame 24 and simply rests, at its rear end 29, on an element 30 forming part of the frame 24 and constituted substantially, in the non-limiting illustrated example, by a longitudinal member connected in known manner, not shown for simplicity, to suitable cross-members, also not shown. The back rest 25 is provided with a lower end 31 which projects in a cantilever manner beyond the hinge point 27 and is arranged to cooperate with a corresponding pin 32, carried by the longitudinal member 30 in the illustrated example, in order to support the back rest 25 in the working position, shown in Figure 1, in which the back rest 25 is prevented from rotating towards the rear seat 4 and is able to support the back of a user seated on the seat 2. The cushion assembly 26 is hinged at 33 to the longitudinal member 30 so as to be able to rotate about an axis parallel to the axis of rotation of the back rest 25, and its end 29 is arranged to cooperate with a concave surface 34 of the support element in such a manner as to prevent accidental movement of said cushion assembly 26. By virtue of the described structure it is apparent that the cushion assembly 26 of the seat 2 can at any moment be rotated manually on its hinges 33 by the user so as to move it towards the front of the vehicle 1 through an angle such as to uncover the underlying frame 24 and thus enable the back rest 25 to be subsequently rotated on its hinges 27 towards the cushion assembly 26, until the back rest 25 assumes a folded position, illustrated in Figure 2, in which it is substantially coplanar with the load-carrying platform 6 and rests against the lower surface 35 of the seat 26.

In particular, according to the invention, the cushion assembly 26 is able to assume an overturned position, shown in Figure 2, in which it has been rotated about the frame 24 through an angle of approximately 180°, and in which it projects forwards in a cantilever manner from said frame 24 so as to define with this latter a seat able to completely receive the back rest 25 when this latter is in said folded position, as shown in Figure 2. In order to attain said folded positions, it is apparent that the seat 2 and its component elements must be disposed in such a manner as to prevent interference between the steering wheel 3 and the folding trajectories of the back rest 25 and cushion assembly 26, shown by dashed and dotted lines in Figure 2. Finally, according to the invention, the back rests 7 and 25 comprise respective rear surfaces 38 and 39 arranged to form with the load-carrying platform 6, when said back rests 7 and 25 are in their folded position of Figure 2, a single load-bearing surface able to allow goods and/or luggage to be also loaded on to the front part of the vehicle 1, and/or able to constitute a surface on which the users of the vehicle 1 can lie down, so that they can extend themselves comfortably inside said vehicle 1,

The advantages attained by the present invention are apparent from the aforegoing description. In this respect, by virtue of the particular described structures, the seats of the vehicle according to the invention, although being provided with normal padding of the type used on known seats, can be folded towards the front of the vehicle so as to form a single loading or lying-down surface with the rear load-carrying platform 6, and which thus extends from the rear end of the vehicle to substantially the front end of the passenger compartment of the vehicle, below the steering wheel 3. Consequently, vehicles provided with seats constructed in the described manner offer high running comfort to the vehicle users when they are seated thereon in the configuration of Figure 1, while at the same time, by using substantially rigid padded elements such as those described, enabling a result to be obtained which is currently obtainable only with certain vehicles which use special seats which are substantially of deck-chair configuration and substantially free or nearly free of padding, thus being of poor comfort.

**Claims**

1. A vehicle (1) of the type comprising at least one front seat (2) and a rear seat (4), a floor (5) carrying said seats, and a load-carrying platform (6) disposed to the rear of said rear seat (4); wherein said rear seat (4) comprises a back-rest (7) hinged to said floor (5) in proximity to the load-carrying platform in such a manner to be able to rotate about its hinging axis (10) in a direction towards said front seat (2) in order to move into a folded-down position in which it is substantially coplanar with said load-carrying platform (6), and a cushion assembly (8) arranged to move with translatory motion towards said floor (5) while keeping substantially parallel to the latter when the back-rest (7) is rotated; and wherein said front seat (2) comprises a supporting frame (24) disposed substantially parallel to said floor at a lower level than said load-carrying platform (6) a respective back-rest (25) hinged to said frame so as to be free to rotate about an axis substantially parallel to said load-carrying platform (6), and a respecetive cushion assemby (26) hinged at its front end (28) to said frame and simply resting on an element (30) of the latter at its rear end (29), in such a manner to be able to rotate towards the front of the vehicle (1) through an angle such as to enable said back rest (25) to rotate towards said cushion assembly (26) as far as a folded-down position in which said back-rest (25) is substantially coplanar with said load-carrying platform (6) and rests against said cushion assembly (26); **characterized** in that said rear seat (4) comprises in combination at least one first connection bar (11) hinged at one end (12) to the floor (5) and at the opposite end (13) to a front end ( 14) of said respective cushion assembly (8), and at least one second connection bar (15), a first end of which is hinged to said floor (5) in proximity to said respective back-rest (7) in a position distant to said hinge axis (10) of the latter and a second end of which is hinged to the rear end (18) of said respective cushion assembly (8); said respective back-rest (7) being linked to said respective cushion assembly (8) in order to form with the latter and said connection bars a single, foldable structure, said rear end (18) of said cushion assembly (8) and said second end of said second connection bar (15) being both conneced to said back-rest (7) in a manner slidable with respect to the latter and rigid with each other via guide means (20) which are carried rigid by said back-rest (7) and are parallel to the same.

2. A vehicle (1) as claimed in claim 1, characterised in that said guide means comprise respective through slots (20) provided in load-bearing elements 21 of said rear back rest (79 and arranged for engagement by respective pins (19) which join said rear end (18) of the cushion assembly (8) to said second connection bar (15).

3. A vehicle (1) as claimed in one of the preceding claims, characterised in that said front seat (2) comprises stop means (32, 31) for supporting said respective back rest (25) in a working position in which it is prevented from rotating towards said rear seat (4) and in which it is able to support the back of a user.

4. A vehicle (1) as claimed in one of the preceding claims, characterised in that said cushion assembly (26) of said front seat (2) is able to assume an overturned position in which it is rotated about said supporting frame (24) through an angle of approximately 180°, and in which it projects frontwards in a cantilever manner from said frame (24) so as to define with this latter a seat able to receive said back rest (25) of the front seat (2) when this latter is in said folded-down position.

5. A vehicle (1) as claimed in one of the preceding claims and further comprising a steering wheel (3) disposed to the front of said front seat (2), characterised in that said front seat (2) is arranged in such a manner as to prevent interference between said steering wheel (3) and the folding trajectories of said back rest and said cushion assembly of this latter (25, 26).

6. A vehicle (1) as claimed in one of the preceding claims, characterised in that said back rests (7, 25) of the front and rear seats (4, 2) comprise respective rear surfaces (39, 38) arranged to form a single load-bearing surface with said load-carrying platform (6) when said back rests (25, 7) are in their folded-down position.

**Revendications**

1. Véhicule (1) du type comprenant au moins un siège avant (2)et un siège arrière (4), un plancher (5) supportant ces sièges et une plate-forme de chargement (6) disposée à l'arrière du siège arrière (4), dans lequel le siège arrière (4) comporte un dossier (7)articulé au plancher (5) à proximité de la plate-forme de chargement de manière à pouvoir pivoter autour de son axe d'articulation (10)en direction du siège avant (2) de façon à arriver dans une position rabattue dans laquelle il est pratiquement dans le même plan que cette plate-forme de chargement (6), et un ensemble de coussin (8) disposé pour se déplacer d'un mouvement de translation en direction du plancher (5) tout en restant pratiquement parallèle à ce dernier lorsque le dossier (7) pivote, et dans lequel le siège avant (2) comporte un cadre support (24) disposé pratiquement parallèlement au plancher à un niveau inférieur à la plate-forme de chargement (6), un dossier respectif (25) articulé à ce cadre de façon à pouvoir pivoter autour d'un axe pratiquement parallèle à la plate-forme de chargement (6), et un ensemble de coussin respectif (26) articulé au niveau de son extrémité avant (28) à ce cadre et reposant simplement sur un élément (30) de ce dernier au niveau de son extrémité arrière (29), de façon à pouvoir pivoter vers l'avant du véhicule (1)d'un angle permettant au dossier (25) de pivoter en direction de l'ensemble de coussin (26) aussi loin qu'une position rabattue dans laquelle ce dossier (25) est pratiquement dans le même plan que la plate-forme de chargement (6) et repose contre l'ensemble de coussin (26), caractérisé en ce que le siège arrière (4) comporte en combinaison au moins une première barre de liaison (11) articulée au niveau d'une extrémité (12) au plancher (5) et au niveau de l'extrémité opposée (13) à une extrémité avant (14) de l'ensemble de coussin respectif (8), et au moins une deuxième barre de liaison (15), dont une première extrémité est articulée au plancher (5) à proximité du dossier respectif (7) en un emplacement distant de l'axe d'articulation (10) de ce dernier et dont une deuxième extrémité est articulée à l'extrémité arrière (18) de l'ensemble de coussin respectif (8), ce dossier (7) étant articulé sur l'ensemble de coussin respectif (8) de façon à former avec ce dernier et avec les barres de liaison une seule structure pliable, l'extrémité arrière (18) de l'ensemble de coussin (8) et la deuxième extrémité de la deuxième barre de liaison (15) étant toutes deux reliées au dossier (7) de façon à pouvoir coulisser par rapport à ce dernier et solidarisées l'une de l'autre par des moyens de guidage (20) solidaires du dossier (7) et parallèles à celui-ci.

2. Véhicule (1) selon la revendication 1, caractérisé en ce que les moyens de guidage comportent des fentes traversantes respectives (20) ménagées dans les éléments porteurs (21) du dossier arrière (7) et agencées pour coopérer avec des broches respectives (19) qui relient l'extrémité arrière (18) de l'ensemble de coussin (8) à la deuxième barre de liaison (15).

3. Véhicule (1) selon l'une quelconque des revendications précédentes, caractérisé en ce que le siège avant (2) comporte des moyens de butée (32,31) pour supporter le dossier associé (25) dans une position de travail dans laquelle il est empêché de pivoter en direction du siège arrière (4) et dans laquelle il peut supporter le dos d'un usager.

4. Véhicule (1) selon l'une des revendications précédentes, caractérisé en ce que l'ensemble de coussin (26) du siège avant (2) peut assumer une position retournée dans laquelle il a pivoté autour du cadre support (24) d'un angle d'environ 180° et dans laquelle il se projette vers l'avant en porte-à-faux du cadre (24) de façon à définir avec ce dernier un siège susceptible de recevoir le dossier (25) du siège avant (2) lorsque ce dernier est dans sa position rabattue.

5. Véhicule (1) selon l'une des revendications précédentes, et comprenant en outre un volant de direction (3) disposé devant le siège avant (2), caractérisé en ce que ce siège avant (2) est agencé de manière à empêcher toute interférence entre le volant de direction (3) et les trajectoires de repliement du dossier (25) et de l'ensemble de coussin (26) de ce siège.

6. Véhicule (1) selon l'une des revendications précédentes, caractérisé en ce que les dossiers (7,25) des sièges arrière et avant (4,2) comportent des surfaces arrière respectives (38,39) agencées pour former une seule surface de chargement avec la plate-forme de chargement (6) lorsque ces dossiers (7,25) sont dans leur position rabattue.

**Patentansprüche**

1. Fahrzeug (1) des Typs, das zumindest einen Vordersitz (2) und einen Rücksitz (4), ein Bodenblech (5), das die Sitze trägt, und eine Lasttrageplattform (6), die an der Rückseite des Rücksitzes (4) vorgesehen ist, wobei der Rücksitz eine Rückenlehne (7) aufweist, die am Bodenblech (5) in der Nähe der Lasttrageplattform in einer solchen Weise angelenkt ist, daß sie in der Lage ist, um ihre Anlenkachse (10) in eine Richtung hin zum Vordersitz (2) zu schwenken, um in eine abgeklappte Position bewegt zu werden, in der sie im wesentlichen koplanar mit der Lasttrageplattform (6) ist, und eine Polsteranordnung (8) aufweist, die vorgesehen ist, mit translatorischer Bewegung zum Bodenblech (5) bewegt zu werden, während sie im wesentlichen parallel zu letzterem verbleibt, wenn die Rückenlehne (7) verschwenkt ist, und bei dem der Vordersitz (2) einen Trägerrahmen (24), der im wesentlichen parallel zum Bodenblech in einer niedrigeren Ebene als die Lasttrageplattform (6) angeordnet ist, eine entsprechende Rückenlehne (25), die am Rahmen so angelenkt ist, daß sie um eine Achse, die im wesentlichen parallel zur Lasttrageplattform (6) drehen kann, und eine entsprechende Polsteranordnung (26) aufweist, die an ihrem vorderen Ende (28) am Rahmen angelenkt ist, und einfach auf einem Element (30) des letzteren an ihrem rückwärtigen Ende (29) derart gelagert, daß sie in der Lage ist, zur Vorderseite des Fahrzeugs (1) um einen solchen Winkel geschwenkt werden kann, daß die Rückenlehne (25) zur Polsteranordnung (26) auch in eine abgeklappte Position verschwenkt wird, in der die Rückenlehne (25) im wesentlichen koplanar mit der Lasttrageplattform (6) ist und gegen die Polsteranordnung (26) anlagert, dadurch gekennzeichnet, daß der Rücksitz (4) in Kombination zumindest einen ersten Verbindungsstab (11), der an einem Ende (12) am Bodenblech (5) und am entgegengesetzten Ende am vorderen Ende (14) der entsprechenden Polsteranordnung (8) angelenkt ist, und zumindest einen zweiten Verbindungsstab (15) aufweist, dessen erstes Ende am Bodenblech (5) in der Nähe der entsprechenden Rückenlehne (7) in einer Stellung beabstandet zur Anlenkachse (19) der Letzteren angelenkt ist und dessen zweites Ende am rückwärtigen Ende (18) der entsprechenden Polsteranordnung (8) angelenkt ist, wobei die entsprechende Rückenlehne (7) mit der entsprechenden Polsteranordnung (8) verbunden ist, um mit letzterer und den Verbindungsstäben einen einzelnen klappbaren Aufbau zu bilden, und das rückwärtige Ende (18) der Polsteranordnung (8) und das zweite Ende des zweiten Verbindungsstabes (15) mit der Rückenlehne (7) in einer Weise gleitbar in Bezug zu letzterer und starr miteinander über Führungsmittel (20) verbunden sind, die starr durch die Rückenlehne (7) und parallel dazu getragen werden.

2. Fahrzeug (1) nach Anspruch 1, dadurch gekennzeichnet, daß die Führungsmittel entsprechende Durchgangsschlitze (20) aufweisen, die in Lasttrageelementen (21) der hinteren Rückenlehne (79) angeordnet und zum Eingriff durch entsprechende Stifte (19) vorgesehen sind, die das rückwärtige Ende (18) der Polsteranordnung (8) mit dem zweiten Verbindungsstab (15) verbinden.

3. Fahrzeug (1) nach einem der vorangegangenen Ansprüche, dadurch gekennzeichnet, daß der Vordersitz (2) Anschlagmittel (32, 31) zum Halten der entsprechenden Rückenlehne (25) in einer Funktionsstellung aufweist, in der sie am Verschwenken zum Rücksitz (4) gehindert ist und in der sie in der Lage ist, den Rücken eines Benutzers zu stützen.

4. Fahrzeug (1) nach einem der vorangegangenen Ansprüche, dadurch gekennzeichnet, daß die Polsteranordnung (26) des Vordersitzes (2) in der Lage ist, eine umgeklappte Stellung einzunehmen, in dem sie um den Trägerrahmen (24) um einen Winkel von ungefähr 180° geschwenkt wird und in der sie sich nach vorn in einer überstehenden Weise vom Rahmen (24) erstreckt, um mit letzterem einen Sitz zu begrenzen, der in der Lage ist, die Rückenlehne (25) des Vordersitzes (2) aufzunehmen, wenn sich dieser letztere in der abgeklappten Position befindet.

5. Fahrzeug (1) nach einem der vorangegangenen Ansprüche und weiterhin aufweisend ein Lenkrad (3), das an der Vorderseite des Vordersitzes (2) angeordnet ist, dadurch gekennzeichnet, daß der Vordersitz (2) in einer solchen Weise angeordnet ist, gegeseitige Beeiflussung zwischen dem Lenkrad (3) und den Klapprichtungsbahnen des Rücksitzes und der Polsteranordnung dieses letzteren (25, 26) zu verhindern.

6. Fahrzeug (1) nach einem der vorangegangenen Ansprüche, dadurch gekennzeichnet, daß die Rückenlehnen (7, 25) der Vorder- und Hintersitze (4, 2) entsprechende rückwärtige Flächen (39, 38) aufweisen, die vorgesehen sind, eine einzige Lasttragefläche mit der Lasttrageplattform (6) zu bilden, wenn sich die Rückenlehnen (25, 7) in ihrer abgeklappten Position befinden.

Fig.1

EP 0 151 426 B1

Fig.2